# EUROPÄISCHE PATENTSCHRIFT

(11) **EP 3 455 500 B1**
(45) Veröffentlichungstag und Bekanntmachung des Hinweises auf die Patenterteilung: **06.09.2023**
(21) Anmeldenummer: 17739572.0
(22) Anmeldetag: 13.07.2017
(51) Int. Cl.: F04D 25/06, F04D 25/08, F04D 25/16, F04D 27/00, F24F 11/00

(54) **VERFAHREN ZUM REGELN VON VENTILATOREN SOWIE VENTILATORGRUPPE**
METHOD FOR REGULATING VENTILATORS, AND VENTILATOR GROUP
PROCÉDÉ DE RÉGULATION DE VENTILATEURS ET GROUPE DE VENTILATEURS

(30) Priorität: 21.07.2016 DE 102016113496
(43) Veröffentlichungstag der Anmeldung: 20.03.2019
(73) Patentinhaber: ebm-papst Mulfingen GmbH & Co. KG, 74673 Mulfingen (DE)
(72) Erfinder: FESSEL, Andreas, 97990 Weikersheim (DE)
(74) Vertreter: Staeger & Sperling Partnerschaftsgesellschaft mbB
(86) Internationale Anmeldenummer: PCT/EP2017/067734
(87) Internationale Veröffentlichungsnummer: WO 2018/015270

(56) Entgegenhaltungen:
- WO-A1-2015/058354
- US-A1- 2009 038 564
- US-A1- 2015 030 469

## Beschreibung

Die Erfindung betrifft ein Verfahren zum Regeln von Ventilatoren zur Erzeugung eines vordefinierten Gesamtvolumenstromes sowie die Ventilatorgruppe.

Die Verwendung von Ventilatorgruppen mit einer Vielzahl von einzelnen Ventilatoren zur Erzeugung eines Gesamtvolumenstromes dient zumeist als Ersatz für Großventilatoren, die bezüglich der Anpassbarkeit des Volumenstroms vergleichsweise unflexibel sind. Auch sind Ventilatorgruppen im Betrieb innerhalb eines Kanalnetzes mit ständig wechselnden Druckverhältnissen vorteilhaft, da der gelieferte Gesamtvolumenstrom anpasspar ist. Derartige Ventilatorgruppen parallel betriebener Ventilatoren werden in der Technik meist als "Fan Arrays", "Fan Walls" oder "Fan Grids" bezeichnet.

Beim Einsatz der Ventilatorbaugruppen zeigt sich in der Praxis, dass der benötigte vordefinierte Gesamtvolumentstrom im Betrieb meist geringer ist, als die Summe der Einzelvolumenströme aller parallel betriebener Ventilatoren der Ventilatorbaugruppe, wenn die Ventilatoren in einem Bereich ihres optimalen Wirkungsgrades arbeiten.

Daraus folgt, dass die Ventilatoren innerhalb ihres Leistungskennfeldes links und somit unterhalb des optimalen Wirkungsgrades betrieben werden. Dies hat einen unerwünscht geringen Gesamtwirkungsgrad der Ventilatorgruppe zur Folge.

Druckschriftlicher Stand der Technik aus dem vorliegenden technischen Gebiet ist offenbart in den Dokumente US 2015/030469 A1 und US 2009/038564 A1.

Der Erfindung liegt deshalb die Aufgabe zugrunde, ein Verfahren zur Regelung der Ventilatorgruppe bereit zu stellen, mit dessen Hilfe eine Wirkungsgradverbesserung des Gesamtsystems der Ventilatorgruppe erzielt werden kann, ohne dass zusätzliche bauliche Maßnahmen an einzelnen der Ventilatoren der Ventilatorgruppe vorgenommen werden müssten. Ferner soll eine entsprechend verbesserte Ventilatorgruppe bereit gestellt werden.

Diese Aufgaben werden durch die Merkmalskombination gemäß der Patentansprüche 1 und 12 gelöst.

Erfindungsgemäß wird ein Verfahren zum Regeln einer Ventilatorgruppe zur Erzeugung eines vordefinierten Gesamtvolumenstromes vorgeschlagen, wobei die Ventilatorgruppe aus einer Vielzahl von parallel betriebenen einzelnen Ventilatoren besteht, die jeweils einen anpassbaren Einzelvolumenstrom erzeugen. Die Ventilatorgruppe ist in mindestens eine erste und eine zweite Regelgruppe aufgeteilt, die jeweils mindestens einen Ventilator umfassen.

Unter Einhaltung eines im Ergebnis konstanten Gesamtvolumenstromes wird der Einzelvolumenstrom des mindestens einen Ventilators der ersten Regelgruppe durch eine Regelung in einen Bereich des optimalen Wirkungsgrades durch eine Drehzahlveränderung erhöht und der Einzelvolumenstrom des mindestens einen Ventilators der zweiten Regelgruppe durch Drehzahlverringerung entsprechend reduziert. Dabei ist vorgesehen, dass jederzeit alle Ventilatoren der ersten und zweiten Regelgruppe einen Beitrag zum Gesamtvolumenstrom leisten und zu keinem Zeitpunkt eine Abschaltung eines Ventilators der zweiten Regelgruppe erfolgt.

Die wenigstens eine erste Regelgruppe ist innerhalb seiner höchsten Leistungsaufnahme in sein Wirkungsgradoptimum geregelt, so dass die Energiebilanz des Gesamtsystems der Ventilatorgruppe optimiert ist.

Vorzugsweise wird der anpassbare Einzelvolumenstrom bei gleicher Druckerhöhung realisiert.

Durch eine Abschaltung von einzelnen Ventilatoren in der zweiten Regelgruppe könnte zwar auch eine Reduzierung des Teil-Volumenstromes erreicht werden, der durch eine Erhöhung des Teil-Volumenstromes und einen Betrieb der Ventilatoren der ersten Regelgruppe näher am oder sogar am optimalen Wirkungsgrad ausgeglichen wird. Jedoch wären hierfür bauliche Maßnahmen an den abzuschaltenden Ventilatoren vorzusehen, um einen Rückstrom der geförderten Luft zu verhindern. Beispielsweise könnten Verschlussklappen eine derartige Rückströmung verhindern. Der zusätzliche bauliche Aufwand ist jedoch aufwendig und kostenerhöhend.

Vorteilhaft ist eine Ausführung, bei der die mindestens erste und zweite Regelgruppe jeweils wenigstens einen Ventilator aufweist. Auch kann eine Vielzahl von Ventilatoren vorgesehen werden. Hierdurch erhöht sich die Variabilität und Anpassbarkeit des Systems.

Durch das erfindungsgemäße Regelungsverfahren werden die Ventilatoren der ersten Regelgruppe mit höherer Leistung und näher am oder sogar am optimalen Wirkungsgrad betrieben. Die Leistung der Ventilatoren der wenigstens zweiten Regelgruppe wird entsprechend reduziert, wobei der Gesamtvolumenstrom konstant bleibt. Die Erhöhung der Leistung der Ventilatoren der ersten Regelgruppe wirkt sich stärker positiv auf den Wirkungsgrad des Gesamtsystems der Ventilatorgruppe aus, als die Reduzierung der Leistung der wenigstens zweiten Regelgruppe, so dass der Gesamtwirkungsgrad der Ventilatorgruppe insgesamt verbessert ist. In einer vorteilhaften Ausführungsform wird ausdrücklich vorgesehen, dass zumindest einzelne der Ventilatoren der ersten Regelgruppe in ihrem Wirkungsgradoptimum betrieben werden.

Der förderbare Gesamtvolumenstrom der Ventilatorgruppe ist variabel und auf die Einsatzanforderungen anpasspar. Die Anpassung des Gesamtvolumenstroms in den verbesserten Wirkungsgradbereich geht dabei jedoch von einem konstanten Gesamtvolumenstrom in einem Betriebspunkt aus. Für den entsprechenden Betriebspunkt erfolgt die Anpassung der Einzelvolumenströme der ersten und der wenigstens zweiten Regelgruppe.

In einer Weiterbildung des Verfahrens wird vorgesehen, dass, soweit die Ventilatoren der zweiten Regelgruppe im optimalen Wirkungsgrad betrieben werden, eine Änderung des Wertes des Gesamtvolumenstroms durch eine Drehzahlveränderung der Ventilatoren der ersten Regelgruppe erfolgt, um diese näher an den optimalen Betriebspunkt zu führen.

Um das Optimierungspotenzial bezüglich des Wirkungsgrads und die sich zum Gesamtvolumen addierenden Einzelvolumenströme der parallel betriebenen Ventilatoren aller Regelgruppen zu ermitteln, wird eine Betriebspunktbestimmung der einzelnen Ventilatoren oder Regelgruppen durchgeführt. Hierzu ist in einer Ausführung vorgesehen, dass ein Teilvolumenstrom jeder der mindestens ersten und zweiten Regelgruppe erfasst und an die Regelung übermittelt wird.

Dies erfolgt in einem Ausführungsbeispiel dadurch, dass kontinuierlich Betriebspunkte aller Ventilatoren der mindestens ersten und zweiten Regelgruppe ermittelt und an die Regelung übermittelt werden, wobei sich die Betriebspunkte aus Volumenstrom (m³/h) und Druck (Pa), dem strömungstechnischen Wirkungsgrad in Prozent, der Aufnahmeleistung (Watt) des jeweiligen Ventilators und der relativen Leistungsaufnahme bezogen auf das geförderte Luftvolumen (W/m³/h) ergeben. Die Übertragung der Daten erfolgt in einem ersten Ausführungsbeispiel über einen Datenbus.

Ein alternatives Ausführungsbeispiel sieht vor, dass die Betriebspunkte aus diesen Parametern errechnet werden, wobei deren Ermittlung sensorlos erfolgt.

Alternativ wird in einer Ausführungsvariante vorgesehen, dass die Ermittlung der Betriebspunkte durch eine Volumenstrommessung über an den Ventilatoren angeordnete Drucksensoren erfolgt, wobei die Betriebspunkte aus Parametern ermittelt werden, welche eine Druckerhöhung als Funktion des über die Drucksensoren gemessenen Volumenstromes in Abhängigkeit der Drehzahl des jeweiligen Ventilators umfassen.

In einer Weiterbildung des Verfahrens werden die ermittelten Betriebspunkte durch einen Abgleich mit einem von einer intern im jeweiligen Ventilator vorgesehenen Leistungserfassung ausgegebenen Kontrollwert überprüft. Um die Kontrollwerte wird ein Korridor festgelegt, wobei Abweichungen innerhalb des Korridors zu keiner Anpassung der Drehzahlen der Ventilatoren führen müssen. Die Größe des Korridors ist an den Einsatzzweck der Ventilatorgruppe anpassbar und kann Genauigkeitsanforderungen an den nötigen Gesamtvolumenstrom berücksichtigen.

In einer vorteilhaften Ausbildung des Verfahrens ist ferner vorgesehen, dass der Einzelvolumenstrom des mindestens einen oder der Vielzahl an Ventilatoren der ersten Regelgruppe durch die Regelung mittels einer kontinuierlichen Drehzahlveränderung in den Bereich des optimalen Wirkungsgrades erhöht wird und der Einzelvolumenstrom des mindestens einen oder der Vielzahl an Ventilatoren der zweiten Regelgruppe durch eine kontinuierliche Drehzahlverringerung entsprechend reduziert wird. Die kontinuierliche Anpassung der Drehzahlen aller Ventilatoren ermöglicht eine Einstellung des vordefinierten Gesamtvolumenstromes.

In einem Ausführungsbeispiel des Verfahrens regelt die Regelung alle Ventilatoren der ersten Regelgruppe auf eine identische erste Drehzahl und alle Ventilatoren der zweiten Regelgruppe auf eine identische zweite Drehzahl. Die Regelgruppen verhalten sich bezüglich ihrer Volumenförderung komplementär zueinander. Sie können sich zum erforderlichen Gesamtvolumenstrom ergänzen.

Alternativ ist vorgesehen, dass die Regelung eine Drehzahl jedes Ventilators der ersten und zweiten Regelgruppen individuell regelt. In einer Gesamtschau verhalten sich die Regelgruppen ebenfalls komplementär zueinander, jedoch sind die Drehzahlen der einzelnen Ventilatoren individuell anpassbar.

Die Erfindung umfasst neben dem Verfahren zur Regelung auch die Ventilatorgruppe zur Erzeugung des vordefinierten Gesamtvolumenstromes, wobei die Ventilatorgruppe aus einer Vielzahl von parallel betriebenen einzelnen Ventilatoren besteht, die jeweils einen Einzelvolumenstrom erzeugen. Die Ventilatorgruppe ist in mindestens eine erste und eine zweite Regelgruppe aufgeteilt, die jeweils mindestens einen Ventilator umfassen, wobei unter Einhaltung eines im Ergebnis konstanten Gesamtvolumenstromes der Einzelvolumenstrom des mindestens einen Ventilators der ersten Regelgruppe durch eine Regelung in einen Bereich des optimalen Wirkungsgrades durch eine Drehzahlveränderung erhöhbar ist und der Einzelvolumenstrom des mindestens einen Ventilators der zweiten Regelgruppe durch Drehzahlverringerung entsprechend reduzierbar ist. Dabei ist die Ventilatorgruppe ausgebildet, dass jederzeit alle Ventilatoren der ersten und zweiten Regelgruppe einen Beitrag zum Gesamtvolumenstrom leisten.

Die Ventilatorgruppe ist in einer alternativen Ausführung dadurch gekennzeichnet, dass die Vielzahl von parallel betriebenen einzelnen Ventilatoren über die eine Regelung regelbar ist. Die Ventilatoren aller Regelgruppen sind hierzu mit der Regelung über einen Datenbus verbunden.

Ferner ist günstig, dass die Vielzahl von einzelnen Ventilatoren parallel betriebenen und über die Regelung einzeln ansteuerbar ist.

Bei der Ventilatorgruppe ist in einer Ausführung vorgesehen, dass die Vielzahl von parallel betriebenen einzelnen Ventilatoren identisch ausgebildet ist. Alternativ wird vorgesehen, dass die Ventilatoren zumindest teilweise unterschiedliche Leistungen und mithin unterschiedliche maximale Einzelvolumenströme liefern. Durch den Einsatz von Ventilatoren auch mit geringerer Leistung ist eine Kostenersparnis bezüglich der gesamten Ventilatorgruppe realisierbar.

In einer bezüglich der Gesamtleistung vorteilhaften Ausführungsvariante ist die Ventilatorgruppe dadurch gekennzeichnet, dass die Vielzahl von parallel betriebenen einzelnen Ventilatoren zueinander schachbrettartig, d.h. in einer Gitterform angeordnet ist. Die einzelnen Ventilatoren sind dabei seitlich in alle vier Richtungen zueinander beabstandet und beispielsweise in einer Anordnung von 2x2, 3x3, 4x4, 1x2, 2x3, 3x4, 1x3, 2x4, 3x5 Ventilatoren pro Ventilatorgruppe. Die Gesamtzahl ist beliebig und an den Einsatzzweck, die gewünschten Leistungsabgabe und den Bauraum anpassbar.

Ferner ist vorteilhaft, wenn die Vielzahl von parallel betriebenen einzelnen Ventilatoren in einer einzelnen Befestigungseinheit aufgenommen ist, wobei alle Ventilatoren gegenüber der Befestigungseinheit in eine vorbestimmte Strömungsrichtung ausgerichtet sind. Als Befestigungseinheit kann beispielsweise eine Rahmenkonstruktion oder eine Art Regalaufbau verwendet werden.

## Patentansprüche

1. Verfahren zum Regeln einer Ventilatorgruppe zur Erzeugung eines vordefinierten Gesamtvolumenstromes, wobei die Ventilatorgruppe aus einer Vielzahl von parallel betriebenen einzelnen Ventilatoren besteht, die jeweils einen Einzelvolumenstrom erzeugen, wobei die Ventilatorgruppe in mindestens eine erste und wenigstens eine zweite Regelgruppe aufgeteilt ist, die jeweils mindestens einen Ventilator umfassen, und wobei unter Einhaltung eines im Ergebnis konstanten Gesamtvolumenstromes der Einzelvolumenstrom des mindestens einen Ventilators der ersten Regelgruppe durch eine Regelung in einen Bereich des optimalen Wirkungsgrades durch eine Drehzahlveränderung erhöht wird und der Einzelvolumenstrom des mindestens einen Ventilators der zweiten Regelgruppe durch Drehzahlverringerung entsprechend reduziert wird, wobei jederzeit alle Ventilatoren der ersten und zweiten Regelgruppe einen Beitrag zum Gesamtvolumenstrom leisten.

2. Verfahren nach Anspruch 1, **dadurch gekennzeichnet, dass** die wenigstens eine erste Regelgruppe innerhalb seiner höchsten Leistungsaufnahme in sein Wirkungsgradoptimum geregelt ist, so dass die Energiebilanz des Gesamtsystems der Ventilatorgruppe optimiert ist.

3. Verfahren nach Anspruch 1 oder 2, **dadurch gekennzeichnet, dass** die mindestens erste und wenigstens zweite Regelgruppe jeweils eine Vielzahl von Ventilatoren aufweist.

4. Verfahren nach Anspruch 1, 2 oder 3, **dadurch gekennzeichnet, dass** ein Teilvolumenstrom jeder der mindestens ersten und wenigstens einen zweiten Regelgruppe erfasst und an die Regelung übermittelt wird.

5. Verfahren nach zumindest einem der vorigen Ansprüche, **dadurch gekennzeichnet, dass** kontinuierlich Betriebspunkte aller Ventilatoren der mindestens ersten und zweiten Regelgruppe ermittelt und an die Regelung übermittelt werden, wobei sich die Betriebspunkte aus den Werten von Volumenstrom/Druck, dem strömungstechnischen Wirkungsgrad, der Aufnahmeleistung und der relativen Leistungsaufnahme bezogen auf das geförderte Luftvolumen ergeben.

6. Verfahren nach dem vorigen Anspruch, **dadurch gekennzeichnet, dass** die Betriebspunkte sensorlos ermittelt werden.

7. Verfahren nach Anspruch 5, **dadurch gekennzeichnet, dass** eine Ermittlung der Betriebspunkte durch eine Volumenstrommessung über an den Ventilatoren angeordnete Drucksensoren erfolgt, wobei die Betriebspunkte aus Parametern errechnet werden, welche eine Druckerhöhung als Funktion des über die Drucksensoren gemessenen Volumenstromes in Abhängigkeit der Drehzahl des jeweiligen Ventilators umfassen.

8. Verfahren nach dem vorigen Anspruch, **dadurch gekennzeichnet, dass** die ermittelten Betriebspunkte durch einen Abgleich mit einem von einer intern im jeweiligen Ventilator vorgesehenen Leistungserfassung ausgegebenen Kontrollwert überprüft werden.

9. Verfahren nach zumindest einem der vorigen Ansprüche, **dadurch gekennzeichnet, dass** der Einzelvolumenstrom des mindestens einen Ventilators der ersten Regelgruppe durch die Regelung mittels einer kontinuierlichen Drehzahlveränderung in den Bereich des optimalen Wirkungsgrades erhöht wird und der Einzelvolumenstrom des mindestens einen Ventilators der wenigstens einen zweiten Regelgruppe durch eine kontinuierliche Drehzahlverringerung entsprechend reduziert wird.

10. Verfahren nach zumindest einem der vorigen Ansprüche, **dadurch gekennzeichnet, dass** die Regelung alle Ventilatoren der ersten Regelgruppe auf eine identische erste Drehzahl und alle Ventilatoren der wenigstens einen zweiten Regelgruppe auf eine identische zweite Drehzahl regelt.

11. Verfahren nach zumindest einem der vorigen Ansprüche 1 bis 9, **dadurch gekennzeichnet, dass** die Regelung eine Drehzahl jedes Ventilators der ersten und zweiten Regelgruppen individuell regelt.

12. Ventilatorgruppe zur Erzeugung eines vordefinierten Gesamtvolumenstromes, wobei die Ventilatorgruppe aus einer Vielzahl von parallel betriebenen einzelnen Ventilatoren besteht, die jeweils einen Einzelvolumenstrom erzeugen, wobei die Ventilatorgruppe in mindestens eine erste und eine zweite Regelgruppe aufgeteilt ist, die jeweils mindestens einen Ventilator umfassen, und wobei unter Einhaltung eines im Ergebnis konstanten Gesamtvolumenstromes der Einzelvolumenstrom des mindestens einen Ventilators der ersten Regelgruppe durch eine Regelung in einen Bereich des optimalen Wirkungsgrades durch eine Drehzahlveränderung erhöhbar ist und der Einzelvolumenstrom des mindestens einen Ventilators der wenigstens einen zweiten Regelgruppe durch Drehzahlverringerung entsprechend reduzierbar ist, wobei die Ventilatorgruppe ausgebildet ist, dass jederzeit alle Ventilatoren der ersten und zweiten Regelgruppe einen Beitrag zum Gesamtvolumenstrom leisten.

13. Ventilatorgruppe nach dem vorigen Anspruch, **dadurch gekennzeichnet, dass** die Vielzahl von parallel betriebenen einzelnen Ventilatoren über die eine Regelung regelbar ist.

14. Ventilatorgruppe nach zumindest einem der beiden vorigen Ansprüche, **dadurch gekennzeichnet, dass** die Vielzahl von parallel betriebenen einzelnen Ventilatoren über die Regelung einzeln ansteuerbar ist.

15. Ventilatorgruppe nach zumindest einem der Ansprüche 12 bis 14, **dadurch gekennzeichnet, dass** die Vielzahl von parallel betriebenen einzelnen Ventilatoren identisch ausgebildet ist.

16. Ventilatorgruppe nach zumindest einem der Ansprüche 12 bis 15, **dadurch gekennzeichnet, dass** die Vielzahl von parallel betriebenen einzelnen Ventilatoren zueinander schachbrettartig, d.h. in einer Gitterform angeordnet ist.

17. Ventilatorgruppe nach zumindest einem der Ansprüche 12 bis 16, **dadurch gekennzeichnet, dass** die Vielzahl von parallel betriebenen einzelnen Ventilatoren in einer einzelnen Befestigungseinheit aufgenommen ist, wobei alle Ventilatoren gegenüber der Befestigungseinheit in eine vorbestimmte Strömungsrichtung ausgerichtet sind.

## Claims

1. A Method for controlling a fan group in order to generate a predefined total volumetric flow, wherein the group of fans consists of a plurality of individual fans operated in parallel, each generating an individual volumetric flow, wherein the group of fans is divided into at least a first and a second control group, each comprising at least one fan, and wherein the individual volumetric flow of the at least one fan of the first control group is increased by an adjustment into a range of optimum efficiency by a change in rotational speed, while in effect maintaining a constant overall volumetric flow, and the individual volumetric flow of the at least one fan of the second control group is reduced accordingly by a reduction in rotational speed, wherein all the fans of the first and second control groups are making a contribution to the overall volumetric flow at all times.

2. A method according to Claim 1, **characterized in that** the at least one first control group is adjusted within its highest power consumption into its efficiency optimum, such that the energy balance of the overall system of the group of fans is optimized.

3. A method according to claim 1 or 2, **characterized in that** the at least first and the at least second control group each have a plurality of fans.

4. A method according to claim 1, 2 or 3, **characterized in that** a partial volumetric flow of each of the at least first and the at least one second control group is detected and transmitted to the control system.

5. A method according to at least one of the preceding claims, **characterized in that** the operating points of all the fans of the at least first and second control group are continuously determined and transmitted to the control system, wherein the operating points are acquired from the values of volumetric flow/pressure, fluidic efficiency, input power and the relative power consumption based on the volume of air delivered.

6. A method according to the preceding claim, **characterized in that** the operating points are determined without the use of a sensor.

7. A method according to claim 5, **characterized in that** the operating points are determined by a volumetric flow measurement by pressure sensors arranged on the fans, wherein the operating points are calculated from parameters, which include a pressure increase as a function of the volumetric flow measured via the pressure sensors as a function of the rotational speed of the respective fan.

8. A method according to the preceding claim, **characterized in that** the determined operating points are checked by comparing with a control value output by a power detection provided internally in the respective fan.

9. A method according to at least one of the preceding claims, **characterized in that** the individual volumetric flow of the at least one fan of the first control group is increased by adjusting by means of a continuous change in rotational speed into the range of optimum efficiency, and the individual volumetric flow of the at least one fan of the at least one second control group is reduced correspondingly by a continuous reduction in rotational speed.

10. A method according to at least one of the preceding claims, **characterized in that** the control system adjusts all the fans of the first control group to an identical first rotational speed and all the fans of the at least one second control group to an identical second rotational speed.

11. A method according to at least one of the preceding claims 1 to 9, **characterized in that** the control system individually adjusts a rotational speed of each fan of the first and second control groups.

12. A fan group for generating a predefined total volumetric flow, wherein the group of fans consists of a plurality of individual fans operated in parallel, each generating an individual volumetric flow, wherein the group of fans is divided into at least a first and a second control group, each comprising at least one fan, and wherein the individual volumetric flow of the at least one fan of the first control group may be increased by adjusting into a range of optimum efficiency by a change in rotational speed, while in effect maintaining a constant overall volumetric flow, and the individual volumetric flow of the at least one fan of the second control group may be reduced accordingly by a reduction in rotational speed, wherein the group of fans is designed such that all the fans of the first and second control groups are making a contribution to the overall volumetric flow at all times.

13. A fan group according to the previous claim, **characterized in that** the plurality of individual fans operated in parallel via the one control is adjustable.

14. A fan group according to at least one of the two preceding claims, **characterized in that** the plurality of individual fans operated in parallel may be controlled individually via the control system.

15. A fan group according to at least one of claims 12 to 14, **characterized in that** the plurality of individual fans operated in parallel is identical.

16. A fan group according to at least one of claims 12 to 15, **characterized in that** the plurality of individual fans operated in parallel to one another is arranged like a checkerboard, i.e., in a grid shape.

17. A fan group according to at least one of claims 12 to 16, **characterized in that** the plurality of individual fans operated in parallel is accommodated in a single mounting unit, wherein all the fans are aligned with respect to the mounting unit in a predetermined flow direction.

## Revendications

1. Procédé de régulation d'un groupe de ventilateurs pour la production d'un débit volumique total prédéfini, dans lequel le groupe de ventilateurs est composé d'une pluralité de ventilateurs individuels fonctionnant en parallèle qui produisent chacun un débit volumique individuel, dans lequel le groupe de ventilateurs est divisé en au moins un premier et en au moins un deuxième groupe de régulation qui comprennent chacun au moins un ventilateur, et dans lequel, tout en conservant un débit volumique total constant en fin de compte, le débit volumique individuel dudit au moins un ventilateur du premier groupe de régulation est augmenté par une régulation dans une plage du rendement optimal par une variation de vitesse de rotation, et le débit volumique individuel dudit au moins un ventilateur du deuxième groupe de régulation est réduit de manière correspondante par une diminution de vitesse de rotation, dans lequel à tout moment tous les ventilateurs du premier et du deuxième groupe de régulation contribuent au débit volumique total.

2. Procédé selon la revendication 1, **caractérisé en ce que** ledit au moins un premier groupe de régulation est régulé à l'intérieur de sa consommation d'énergie maximale pour son rendement optimal de sorte que le bilan énergétique du dispositif entier du groupe de ventilateurs est optimisé.

3. Procédé selon la revendication 1 ou 2, **caractérisé en ce que** ledit au moins un premier et ledit au moins un deuxième groupe de régulation présente respectivement une pluralité de ventilateurs.

4. Procédé selon la revendication 1, 2 ou 3, **caractérisé en ce qu'**un débit volumique partiel de chacun dudit au moins un premier et dudit au moins un deuxième groupe de régulation est détecté et transmis au dispositif de régulation.

5. Procédé selon au moins l'une des revendications précédentes, **caractérisé en ce que** des points de fonctionnement de tous les ventilateurs dudit au moins un premier et un deuxième groupe de régulation sont établis en continu et transmis au dispositif de régulation, dans lequel les points de fonctionnement résultent des valeurs du débit volumique/ de la pression, du rendement fluidique, de la puissance absorbée et de la consommation d'énergie relative par rapport au volume d'air débité.

6. Procédé selon la revendication précédente, **caractérisé en ce que** les points de fonctionnement sont établis sans capteur.

7. Procédé selon la revendication 5, **caractérisé en ce qu'**un établissement des points de fonctionnement est effectué par une mesure de débit volumique par l'intermédiaire de capteurs de pression disposés sur les ventilateurs, dans lequel les points de fonctionnement sont calculés à partir de paramètres qui comprennent une augmentation de pression comme une fonction du débit volumique mesuré par l'intermédiaire des capteurs de pression en fonction de la vitesse de rotation du ventilateur respectif.

8. Procédé selon la revendication précédente, **caractérisé en ce que** les points de fonctionnement établis sont vérifiés par une comparaison avec une valeur de contrôle sortie par un dispositif de détection de puissance prévu en interne dans le ventilateur respectif.

9. Procédé selon au moins l'une des revendications précédentes, **caractérisé en ce que** le débit volumique individuel dudit au moins un ventilateur du premier groupe de régulation est augmenté par le dispositif de régulation au moyen d'une variation de vitesse de rotation continue dans la plage du rendement optimal, et le débit volumique individuel dudit au moins un ventilateur dudit au moins un deuxième groupe de régulation est réduit de façon correspondante par une diminution de vitesse de rotation continue.

10. Procédé selon au moins l'une des revendications précédentes, **caractérisé en ce que** le dispositif de régulation régule tous les ventilateurs du premier groupe de régulation sur une première vitesse de rotation identique et régule tous les ventilateurs dudit au moins un deuxième groupe de régulation sur une deuxième vitesse de rotation identique.

11. Procédé selon au moins l'une des revendications précédentes 1 à 9, **caractérisé en ce que** le dispositif de régulation régule individuellement une vitesse de rotation de chaque ventilateur du premier et du deuxième groupe de régulation.

12. Groupe de ventilateurs pour la production d'un débit volumique total prédéfini, dans lequel le groupe de ventilateurs est composé d'une pluralité de ventilateurs individuels fonctionnant en parallèle qui produisent chacun un débit volumique individuel, dans lequel le groupe de ventilateurs est divisé en au moins un premier et en au moins un deuxième groupe de régulation qui comprennent chacun au moins un ventilateur, et dans lequel, tout en conservant un débit volumique total constant en fin de compte, le débit volumique individuel dudit au moins un ventilateur du premier groupe de régulation peut être augmenté par une régulation dans une plage du rendement optimal par une variation de vitesse de rotation, et le débit volumique individuel dudit au moins un ventilateur dudit au moins un deuxième groupe de régulation peut être réduit de manière correspondante par une diminution de vitesse de rotation, dans lequel le groupe de ventilateurs est réalisé de telle sorte qu'à tout moment tous les ventilateurs du premier et du deuxième groupe de régulation contribuent au débit volumique total.

13. Groupe de ventilateurs selon la revendication précédente, **caractérisé en ce que** la pluralité de ventilateurs individuels fonctionnant en parallèle peut être régulée par un dispositif de régulation.

14. Groupe de ventilateurs selon au moins l'une des deux revendications précédentes, **caractérisé en ce que** la pluralité de ventilateurs individuels fonctionnant en parallèle peut être pilotée individuellement par l'intermédiaire du dispositif de régulation.

15. Groupe de ventilateurs selon au moins l'une des revendications 12 à 14, **caractérisé en ce que** la pluralité de ventilateurs individuels fonctionnant en parallèle est réalisée de manière identique.

16. Groupe de ventilateurs selon au moins l'une des revendications 12 à 15, **caractérisé en ce que** la pluralité de ventilateurs individuels fonctionnant en parallèle est disposée en damier les uns par rapport aux autres, c'est-à-dire sous forme de grille.

17. Groupe de ventilateurs selon au moins l'une des revendications 12 à 16, **caractérisé en ce que** la pluralité de ventilateurs individuels fonctionnant en parallèle est reçue dans une unité de fixation unique, dans lequel tous les ventilateurs sont orientés dans une direction de flux prédéterminée par rapport à l'unité de fixation.
